# EUROPEAN PATENT SPECIFICATION

(11) **EP 2 071 159 B1**
(45) Date of publication and mention of the grant of the patent: **06.10.2010**
(21) Application number: 08171182.2
(22) Date of filing: 10.12.2008
(51) Int. Cl.: F02D 19/08, F02M 53/02, F02M 69/46

(54) **Passively regulated heat dissipater**
Passiv gesteuertes Heizableitelement
Dispositif de dissipation de chaleur à regulation passive

(30) Priority: 13.12.2007 BR 705422
(43) Date of publication of application: 17.06.2009
(73) Proprietor: Magneti Marelli Sistemas Automotivos Indústria e Comércio Ltda., Avenida de Emancipaçao, N° 801 Galpao 4 Jardim Santa Rita de Cassia 13184-654 Hortolandia /SP (BR)
(72) Inventor: Pontoppidan, Michael, 92700 Colombes (FR); Montanari, Gino, Santana do Parnaiba/SP (BR); Aleo, Ricardo, Campinas/SP (BR)
(74) Representative: Bérogin, Francis

(56) References cited:
- DE-A1- 10 341 708
- DE-A1- 19 918 227
- DE-A1-102005 036 952
- FR-A- 2 876 161

## Description

The present patent application refers to a tubular passively regulated dissipater for heat diffusion connected to one or more heating devices and inserted in the primary fuel-rail of an Ethanol Cold Start system (ECS).

### STATE OF THE ART

It is a well known fact that various engine features may be affected when fuels different from a classic gasoline are used in an internal combustion (IC) engine.

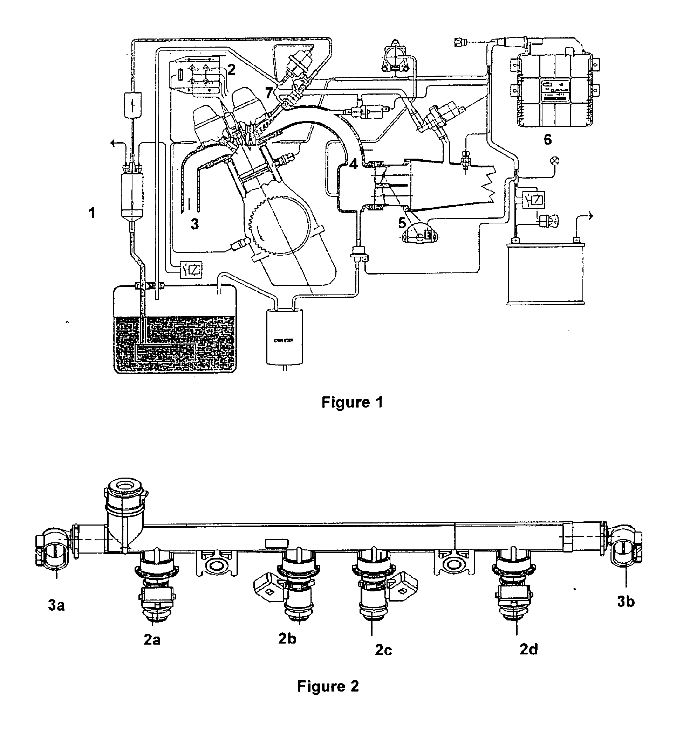

In a modern IC-engine (Figure 1), comprising a combustion chamber (1) with a spark ignition device (2), an exhaust (3) and inlet manifold (4) with a gas flow regulating (5) throttle body and an electronically controlled mixture preparation system (6) with PFI fuel injectors (7), a classic gasoline fuel, with a typical chemical structure of the type C₈H₁₈, enables a cold start performance, which allows the engine to start and warm up at ambient temperatures down to approximately 30°C below zero without use of any auxiliary add-on device.

Figure 1 shows a layout of a strategy for speed/density control (Manifold Absolute Pressure (MAP) and engine speed sensor), but said design is not mandatory. The layout may use any kind of strategy, as long as it supplies the required data to allow the Engine Control Unit (ECU) to compute the relevant data for injector and ignition control.

With different low vaporization fuels, such as ethanol (C₂H₅OH), or a mixture of gasoline and ethanol (e.g. E22 or E85), the cold start performance is strongly affected by the vaporization and the surface tension parameters of the ethanol component, which are quite different from those of a pure gasoline. Fuelling the engine with pure ethanol creates the most difficult situation. In that case engine cold start and warm up become very delicate at ambient temperatures below 10°C to 12°C.

The main reason for which not only the cold start, but also the warm up phase is important, is that for pollutant control (mainly the hydrocarbon content (HC) in the exhaust gas) during the time period in which the oxygen sensor (lambda sensor) is not working (open-loop control strategy), a precise injector control allows a reduction of the emissions of unburned HC.

In recent years, the presence of the ethanol cold start problem led manufacturers to various suggestions of additional devices, which either introduce a separate tank containing a high-vaporization fuel (such as gasoline) or fuel rails in which are randomly introduced simple resistive heating devices on the immediate upstream side of each fuel injector.

Both approaches have major inconveniences. Although functioning well for the cold start itself, the first approach is costly as a separate tank and fuel line for the high-vaporizing fuel must be installed on the vehicle and as the volume of this secondary system is limited (normally under-bonnet location) its capacity to be used during the warm-up period is very limited.

The second type of approach can be used for the cold start, but becomes unreliable for the warm-up period if the temperature profile in the rail is not carefully controlled.

If a precise temperature control is not provided, which allows the average temperature to stay below approximately 90°C the random introduction of a powerful heat source on the injector upstream side in the fuel-rail can eventually lead to heat-conditioned cavitations in the liquid fuel.

Basically, a fuel injector is designed to introduce a metered amount of non-compressible liquid fuel into the intake system. Unfortunately, heat-conditioned cavitations introduce gas bubbles into the liquid fuel and thereby change the state of the fuel from non-compressible to compressible. The basic fluid dynamics of compressible fluids are completely different from those of non-compressible liquids and therefore the metering function of the fuel injector, designed for liquid fuel, is not anymore controllable when a compressible fluid is passing through the metering area inside the injector.

### OBJECT OF THE INVENTION

The object of the present invention is to propose a solution that allows by a simple mechanical means without complicated feed-back temperature control, to provide an asymptotic temperature stabilization in a fuel rail to enable a cold start function similar to that of a gasoline fuelled IC-engine, without any of the above mentioned major inconveniencies.

This objective is reached by means of a tubular heat dissipater connected to one or more heating devices and inserted in a primary fuel rail of a conventional fuel injection system.

### DESCRIPTION OF THE DRAWINGS

The present invention will be better understood in the light of the attached figures, given as mere examples, but not limitative, in which::
- Figure 1 is a view of a conventional PFI-injection system for an internal combustion engine;
- Figure 2 is a view of a fuel rail with attached fuel injectors and heating elements at each extremity;

- Figure 3 is a cut of the fuel rail, showing the injectors, the heating elements and the tubular dissipater;
- Figure 4 shows an example of the temperature rise in the fuel rail versus time by application of the invention at an ambient temperature of - 3°C ;

### PREFERENTIAL EMBODIMENT

According to the figures presented, particularly Figure 2, the invention adds to the internal volume of a common fuel rail one or more electrically controlled heating elements.

As shown in the Figures, the common fuel rail (1) supplies pressurized fuel to a given number of fuel injectors (2a, 2b, 2c, 2d) and, a heating element (3a, 3b) is inserted at each end of the rail,. Each heating element is a fast acting device with a typical temperature rise-time of approximately 55°C/s (measured in still air at 1 mm from the heater surface).

A heating device (3a or 3b) will typically absorb approximately 300 W at a 12 V supply. The maximum heater temperature should be attained after approximately 8 s. On the contrary to other layouts suggested for this type of cold start device the heaters are not located in the immediate vicinity of a fuel injector ((2a, 2b, 2c or 2d).

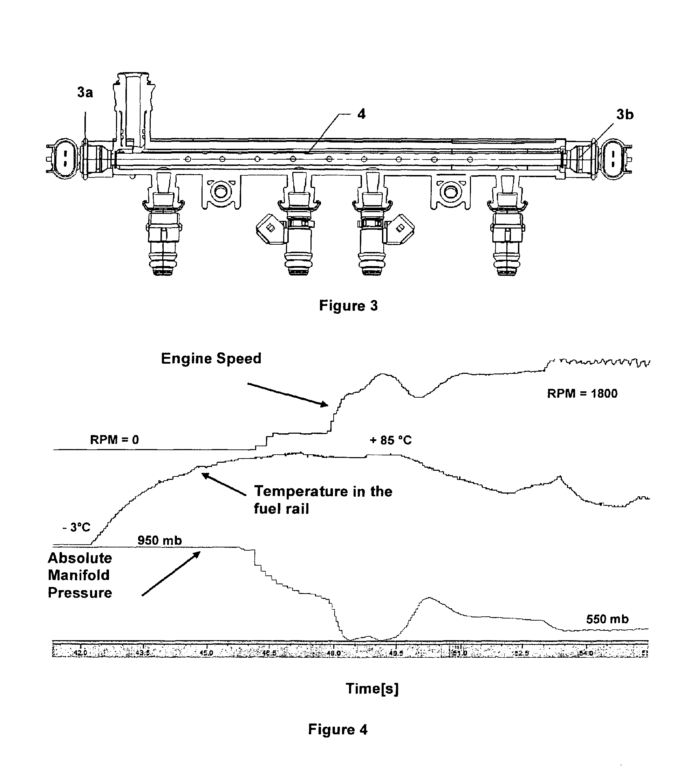

Figure 3 shows the internal arrangement of the system. A minimum distance of at least 10 mm between the heating device surfaces (3a, 3b) and the nearest injector is respected.

A fast acting heating device is difficult to control and therefore a tubular heat dissipater (4) connects the heating devices (3a, 3b). In order to provide the necessary heat transfer from the heating elements (3a, 3b) to the tubular dissipater (4), the material of the heater body (3a, 3b) and the tubular dissipater (4) (e.g. copper or Inconel®) must be identical or have very similar heat dilatation coefficients. The machining of the internal part of the tubular dissipater (4) should allow forced assembly between the tube and the heating element (3a, 3b).

The tubular dissipater (4) has at least two rows of holes that go through one surface of the tube to the other. The rows of holes have an angular distance of 90° between each other. The diameter of a hole should be approximately 75% to 85% of the internal tube diameter, preferably around 80% of the internal diameter of the tubular dissipater (4).

The number of holes in each row is two to four times the total number of injectors attached to the fuel rail (1), preferably three times the number of injectors attached to the rail (1).

The hollow structure of the tubular dissipater (4) provides a heating of the fuel from both the internal and the external tube surfaces. The external diameter of the tube is such to provide a ratio between the volume occupied by the metal of the tubular dissipater (4) and the internal total volume of the fuel rail (1) of approximately 0.1 to 0.3, preferably 0.2.

### EXAMPLE

Figure 4 shows an example of the regulating performance of the invention during a cold start phase of a Flex vehicle fuelled by 100 % ethanol at an ambient temperature of -3° C.

The temperature, measured in the fuel rail (1) in the annular space between the tubular dissipater and the rail wall at a position between the injectors 2b and 2c (figure 1), rises logarithmically in less than 6 seconds towards an asymptotical value of less than 90° C.

As it can be seen from the above example, the invention represents a low cost solution, which produces appropriate temperatures in the fuel rail that prevent problems of heat induced cavitations.

## Claims

1. Passively regulated heat dissipating device for an internal combustion engine provided with a fuel rail (1) **characterized by** the fact that said fuel rail (1) has an internal heating device composed of one or more active heating elements (3a, 3b), each connected to a tubular heat dissipater (4), wherein said heat dissipater (4) has rows of holes along the tube enabling flow from the outside of the tube to its inner volume.

2. Device of claim 1, **characterized by** the fact that the tubular dissipater (4) connects the heating devices (3a, 3b) at opposite sides of the fuel rail (1).

3. Device of claim 1, **characterized by** the fact that the main geometric axis of the tubular dissipater (4) is not a straight line (bend tube).

4. Device of claim 1, **characterized by** the fact that the minimum distance between an active heating element (3a, 3b) and the nearest injector is more than 10 mm.

5. Device of claim 1, **characterized by** the fact that the ratio between the volume occupied by the tubular dissipater (4) and the internal volume of the fuel rail (1) is more than 0.1.

6. Device of claim 1, **characterized by** the fact that the heating surfaces of the heater elements (3a, 3b) and the tubular heat dissipater (4) are made of materials with equal or similar thermal dilatation coefficients.

## Patentansprüche

1. Passiv gesteuerte Wärmeableitvorrichtung für einen mit einer Kraftstoffverteilerleiste (1) ausgestatteten Verbrennungsmotor, **gekennzeichnet durch** die Tatsache, dass die besagte Kraftstoffverteilerleiste (1) eine interne Heizvorrichtung aufweist, die aus einem oder mehreren aktiven Heizelementen (3a, 3b) zusammengesetzt ist, von denen jedes mit einem rohrförmigen Wärmeableiter (4) verbunden ist, wobei der besagte Wärmeableiter (4) entlang des Rohres Reihen von Löchern aufweist, die einen Fluss von der Außenseite des Rohres zu seinem Innenraum ermöglichen.

2. Vorrichtung nach Anspruch 1, **gekennzeichnet durch** die Tatsache, dass der rohrförmige Ableiter (4) an die Heizvorrichtungen (3a, 3b) an gegenüberliegenden Seiten der Kraftstoffverteilerleiste (1) angekoppelt ist.

3. Vorrichtung nach Anspruch 1, **gekennzeichnet durch** die Tatsache, dass die geometrische Hauptachse des rohrförmigen Ableiters (4) keine gerade Linie ist (gebogenes Rohr).

4. Vorrichtung nach Anspruch 1, **gekennzeichnet durch** die Tatsache, dass der Minimalabstand zwischen einem Heizelement (3a, 3b) und der nächsten Kraftstoffdüse mehr als 10 mm beträgt.

5. Vorrichtung nach Anspruch 1, **gekennzeichnet durch** die Tatsache, dass das Verhältnis zwischen dem vom rohrförmigen Ableiter (4) eingenommenen Volumen und dem Innenvolumen der Kraftstoffverteilerleiste (1) mehr als 0,1 beträgt.

6. Vorrichtung nach Anspruch 1, **gekennzeichnet durch** die Tatsache, dass die Heizoberflächen der Heizelemente (3a, 3b) und der rohrförmige Wärmeableiter (4) aus Materialien mit gleichen oder ähnlichen Wärmedehnungskoeffizienten hergestellt sind.

## Revendications

1. Dispositif de dissipation de chaleur à régulation passive pour un moteur à combustion interne muni d'un rail de carburant (1), **caractérisé par le fait que** ledit rail de carburant (1) comprend un dispositif de chauffage interne composé d'un ou plusieurs éléments chauffants actifs (3a, 3b), connectés chacun à un dissipateur de chaleur tubulaire (4), dans lequel ledit dissipateur de chaleur (4) comprend des rangées de trous le long du tube permettant un écoulement de l'extérieur du tube vers son volume intérieur.

2. Dispositif selon la revendication 1, **caractérisé par le fait que** le dissipateur tubulaire (4) relie les dispositifs de chauffage (3a, 3b) sur des côtés opposés du rail de carburant (1).

3. Dispositif selon la revendication 1, **caractérisé par le fait que** l'axe géométrique principal du dissipateur tubulaire (4) n'est pas une ligne droite (tube cintré).

4. Dispositif selon la revendication 1, **caractérisé par le fait que** la distance minimale entre un élément chauffant actif (3a, 3b) et l'injecteur le plus proche est supérieure à 10 mm.

5. Dispositif selon la revendication 1, **caractérisé par le fait que** le rapport entre le volume occupé par le dissipateur tubulaire (4) et le volume intérieur du rail de carburant (1) est supérieur à 0,1.

6. Dispositif selon la revendication 1, **caractérisé par le fait que** les surfaces chauffantes des éléments chauffants (3a, 3b) et du dissipateur de chaleur tubulaire (4) sont constituées de matériaux présentant des coefficients de dilatation thermique égaux ou similaires.
